Europäisches Patentamt

European Patent Office

Office européen des brevets

(11) Publication number: **0 485 776 A2**

# EUROPEAN PATENT APPLICATION

(21) Application number: **91118128.7**

(22) Date of filing: **24.10.91**

(51) Int. Cl.⁵: **G06F  15/72**

(30) Priority: **15.11.90 US 613440**

(43) Date of publication of application:
**20.05.92 Bulletin  92/21**

(84) Designated Contracting States:
**DE FR GB**

(71) Applicant: **MOTOROLA INC.**
**1303 East Algonquin Road**
**Schaumburg Illinois 60196(US)**

(72) Inventor: **Diefendorff, Keith Everett**
**3405 Hancock Drive**
**Austin, Texas 78731(US)**
Inventor: **Sooch, Janet H.**
**11525 Silmarillion Trail**
**Austin, Texas 78739(US)**

(74) Representative: **Lupton, Frederick et al**
**Motorola European Intellectual Property**
**Operations Seal House Seal Road**
**Basingstoke, Hants RG21 1NO(GB)**

(54) **A method for executing graphics pixel packing instructions in a data processor.**

(57) A method for executing a graphics pixel packing
instruction in a data processing system (20). An
instruction sequencer (22) transfers graphics instruc-
tion to a graphics execution unit (29). In response to
receiving a pixel packing instruction, the graphics
execution unit (29) transfers a selected number of
data operands from the communications bus (36).
One of the selected data operands comprises a
plurality of bits representative of one or more fixed
point values, each fixed point value represents the
intensity of one of the color channels within a pixel.
The graphics execution unit (29) truncates each of
the fixed point values to a predetermined number of
bits to generate a corresponding number of trun-
cated bit fields, and packs the truncated bits fields
into a predetermined position in a second data
operand. The second data operand accumulates the
truncated color channel values into pixel format, to
provide an intermediate value, which is rotated to
provide a result data operand.

## FIELD OF THE INVENTION

This invention relates generally to the rendering of three-dimensional graphic images, and more particularly to a method for the rendering of three-dimensional graphic images using a data processor.

## CROSS-REFERENCE TO RELATED APPLICATION

This application is related to an application entitled "A Method for Executing Graphics Saturating Arithmetic Instructions in a Data Processor", (our ref. SC01076A, European Patent Application     ).

## BACKGROUND OF THE INVENTION

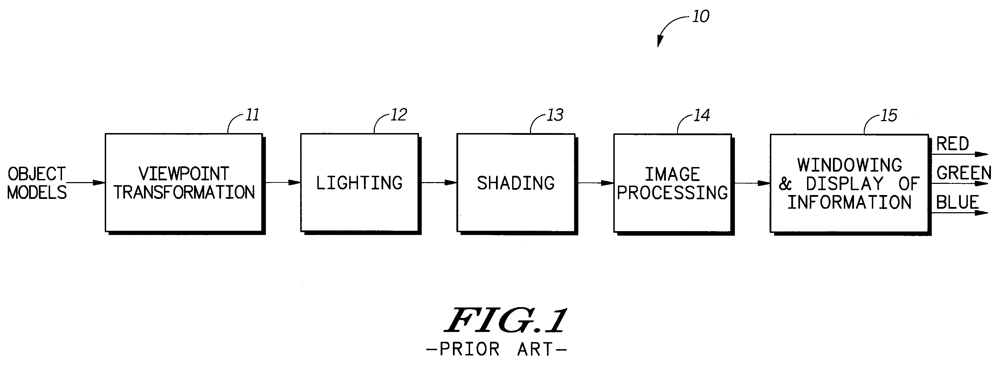

Today's high performance interactive display systems (e.g. personal computers and workstations) require specialized graphics assist hardware, or complex three-dimensional (3-D) rendering programs, to generate the realistic, animated 3-D images. Essentially, the graphics task is to convert an image, stored as an abstract representation of primitive shapes, and render that image as a realistic scene on a computer display. The graphics problem is to do it with dispatch. Shown in FIG. 1 is a block diagram 10 illustrating a known process for rendering realistic, animated three-dimensional (3-D) images. The process consists of five major steps, and is computationally intensive. Depending upon the system, some of the process steps may be performed in software, with the remainder being performed using graphics assist hardware. An image is typically represented as a group of mathematically described objects specified by shape, coordinates, surface properties, and color values. In the first step, the viewpoint transformation process 11, the objects must undergo a series of mathematical transformations (matrix multiplications) to orient the objects in space relative to the viewer, scale them to the right size, adjust for perspective foreshortening, and clip to the desired display volume. Coordinates are almost exclusively maintained and manipulated as floating point numbers.

In the second step, the lighting process 12, lighting models define the lighting to be applied to the image. In this step, ambient, diffuse, and specular lighting models can be applied to the image. Surface detail polygons may be added to simulate texture. Color and lighting information is resolved to a RGB triple at each polygon vertex which specifies the component intensities of the three additive primary colors, red, green, and blue. Normally these component intensities are "fixed point values".

During the shading process 13, the third step, the image must be clipped, projected into two-dimensions, and mapped from image coordinate space to display coordinates. Accordingly, the image is flattened, or decomposed, into simple triangles or scan aligned trapezoids. Shading algorithms are applied to make polygon facets appear solid, to smooth polygonally approximated surfaces, and to convert polygons to an array of pixels suitable for display on a raster scan display device. Color values are interpolated from vertex normals by averaging surface normals of adjacent polygon facets. Then, either linear intensity (Gouraud) or normal-vector (Phong) interpolation is performed shade each polygon. Color slope for each scan line crossing the polygon is computed and used to calculate the color of each pixel on the scan line internal to the polygon. The "color" of each pixel is stored as a triple - one channel for each of the three additive primary colors, red, green, and blue. As pixels are computed, depth information is applied to remove hidden surfaces using various algorithms such as Z-buffering. Anti-aliasing corrections may also be applied to remove discrete-pixel spatial sampling errors which cause object edges to appear jagged.

Three types of shading are commonly used: constant shading, Gouraud shading, and Phong shading. The computational complexity of the constant shading algorithm is less than that of Gouraud and Phong. The image quality of constant shading is inferior to that of Gouraud and Phong, since the constant shading algorithm generates flat looking images with visible facets. The Gouraud shading algorithm provides a marked improvement in the image quality. The Gouraud algorithm is a "scan-line" algorithm which uses linear interpolation to compute the color of the first and last pixel on each scan line crossing the polygon. The linear interpolation requires a high level of computation complexity, thus, making Gouraud shading a prime candidate for use in hardware graphics accelerators. The Phong shading algorithm provides an even higher image quality, but the algorithm is even more computationally difficult, and requires substantial amounts of special hardware to make execution of the algorithm fast enough for continuous use in high resolution interactive displays. Consequently, Phong shading is primarily used in applications requiring high quality output, such as film generation, which allow a trade-off between time and image quality.

Image processing 14 occurs during the fourth step to facilitate both convenient and efficient manipulation of individual objects in a scene independently. In order to accomplish independent manipulation of individual objects, a mechanism is provided for placing one object on top of another. The algorithm must handle the images correctly in the case of transparency, and must blend object edges smoothly (anti-aliasing). For example, if a foreground object is rotated, it is more efficient to simply re-render that object than the entire scene. This is accomplished using compositing algorithms, capable of smoothly blending multiple images. Such algorithms are also capable of accurately rendering the effect of object transparency. Typically, image compositing algorithms utilize a fourth channel, called alpha (a), which is appended to the three (RGB) color channels of each pixel. The value of alpha specifies the percentage of a pixel covered by an object. Using, alpha, the net contribution of a foreground and background object can be computed by interpolation to give a composite color value.

The image is displayed in the final step, image display 15. As the color of each pixel is computed, it is stored in memory as an array of pixels or displayed on the screen by writing it into the frame buffer. The image must be transferred to and from the display system's frame buffer within the context of the governing windowing system. Fast Bit Block Transfers (bitblt), area fills, line drawing algorithms are required to rapidly move images between memory and the frame buffer. Once pixels are placed into the frame buffer, specialized display system hardware constantly scans the frame buffer in sync with the cathode ray tube's (CRT's) raster scan using the pixel data stored in the frame buffer to modulate the intensity of the CRT's red, green, and blue electron guns, and thereby forming the image on the screen. Thus, an important graphics task is to convert an image stored as an object description into a raster image in a pixel array in memory (or a frame buffer). Essentially, the electron beam(s) intensity is modulated by the data read from the frame buffer in sync with the raster scan, to create a visible image on the screen.

Typically, graphics display systems use three different frame buffer styles: 32-bit true color, 16-bit dithered true color, and 8-bit pseudocolor. The 32-bit true color format is used for high quality displays in the hi-end personal computer and workstation applications. Typically 8-bits are used for each of the three (RGB) color channels and stored packed in a single 32-bit word. The 16-bit dithered true color is used for medium cost color displays, wherein 4-5 bits are used for each of the three (RGB) color channels and two pixels are stored for each 32-bit word. The 8-bit pseudocolor frame buffer system is used for low-end color and high-end grayscale displays. Generally, in the pseudocolor frame buffer, 8-bits per pixel are used, and four pixels are stored in a 32-bit word.

Microprocessors having high performance floating point capabilities may be used to rapidly perform viewpoint transformation and lighting calculations on complex images. In addition, microprocessors with flexible data manipulation instructions and high data throughput can efficiently run the algorithms (i.e. bitblt) necessary to achieve good display system performance. The shading, raster conversion, and image processing phases of the problem, however, are computation intensive and require hardware support beyond that found in most conventional microprocessors to achieve good interactive performance. Generally, 3-D graphics rendering programs on general purpose microprocessors use "constant" shading algorithms to avoid the more computationally intensive algorithms; however, these microprocessors generate inferior images to Gouraud and Phong shading. Typically, special purpose image rendering hardware is very expensive, and is difficult to integrate into a system. Thus, it is desirable to provide graphics instructions, for use in a conventional microprocessor, targeted at improving performance on the shading, raster conversion and image processing phases of the rendering process.

SUMMARY OF THE INVENTION

The present invention provides in a data processing system, comprising:
storage means for storing a plurality of data elements and a plurality of instructions, said plurality of data elements comprising data operands for use with said plurality of instructions;
an arithmetic logic execution unit for executing a selected type of instructions;
a graphics execution unit for executing a selected type of graphic instructions received from said sequencer means;
communications means coupled to each of said execution units, for providing said instructions of said selected type to each of said execution units, said communications means transferring said plurality of data elements between said storage means and said execution units; and
sequencer means for providing a sequence of instruction addresses to said storage means, for receiving a sequence of instructions for execution by said execution units in response thereto, and for delivering said sequence of instructions to said communications means, said sequencer means also retrieving a required number of data elements from said storage means for each instruction in said sequence of instructions;
a method for executing a packing instruction of a selected type using said graphics execution unit, said method comprising the steps of:
transferring a selected number of data operands to said graphics execution unit, one of said selected data operands comprising a plurality of bits representative of one or more fixed point values;

truncating each of the one or more fixed point values to a predetermined number of bits, said predetermined number of bits comprising a plurality of bit fields;
packing said plurality of bit fields into a single packed bit-field;

inserting said single packed bit-field into a predetermined position in a second one of said selected data operands to provide an insert value.

A method for executing a graphics pixel packing instruction in a data processing system is provided. The data processing system includes a main memory for storing data and instructions, and dedicated execution units for executing instructions of a selected type. The dedicated execution units include an arithmetic logic execution unit, a floating point execution unit for executing floating point instructions, and a graphics execution unit for executing graphics instructions. The execution units are connected to instruction sequencer, which provides instructions and data operands to the execution units, via a communications bus. In response to receiving a pixel packing instruction, the graphics execution unit transfers a selected number of data operands from the communications bus to the graphics execution unit. One of the selected data operands comprises a plurality of bits representative of one or more fixed point values, where each fixed point value represents the intensity of one of the color channels within a pixel. The graphics execution unit truncates each of the fixed point values to a predetermined number of bits to generate a corresponding number of truncated bit fields. The truncated bit fields are packed into a single packed bit-field. The packed bit-field is inserted into a predetermined position in a second data operand, which accumulates the truncated color channel values into pixel format, to provide an intermediate value. The intermediate value is rotated by a predetermined number of bit positions to provide a result data operand. The procedure is repeated, using this result data operand as the second data operand, until one or more pixels have been computed and can be placed in a final pixel array in a frame buffer or the main memory.

## BRIEF DESCRIPTION OF THE DRAWINGS

FIG. 1 is a block diagram illustrating a known process for rendering three-dimensional images in a data processing system.

FIG. 2 is a block diagram illustrating a data processing system for implementing the present invention.

FIG. 3 is a diagram illustrating a packing operation for a graphics instruction, in accordance with the present invention.

FIGS. 4, 5 and 6 are flow diagrams for performing a pixel packing instruction according to a preferred embodiment of the invention.

## DETAILED DESCRIPTION OF A PREFERRED EMBODIMENT

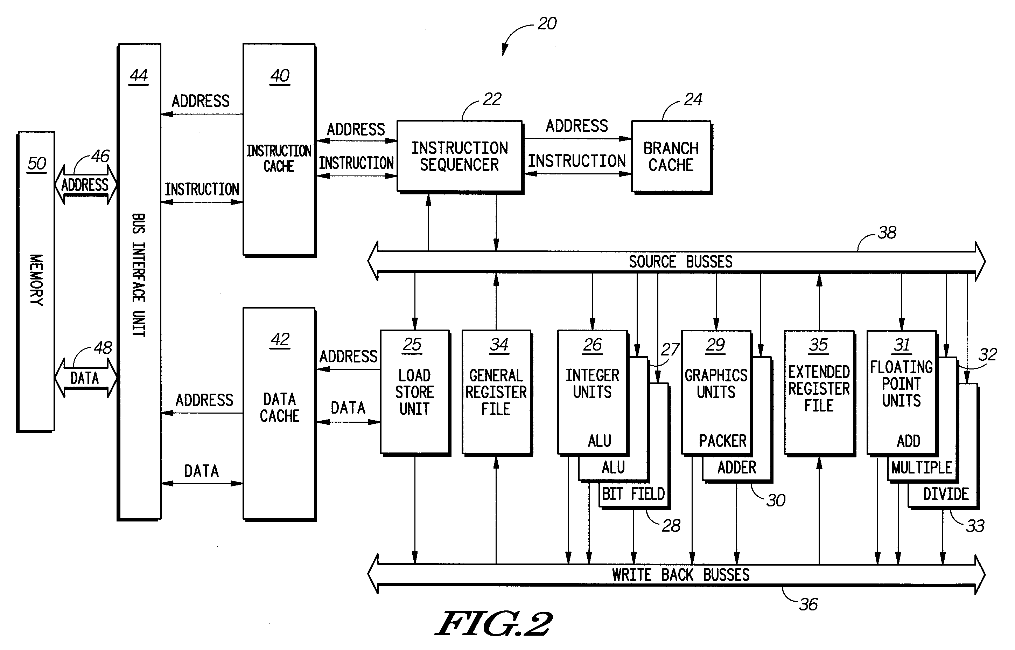

Shown in FIG. 2 is a block diagram illustrated an integrated circuit data processing system 20 for implementing the present invention. In a preferred embodiment, data processing system 20 comprises an instruction sequencer 22, a branch cache 24, load/store units 25, integer execution units 26-28, graphics execution units 29-30, floating point units 31-33, and register files 34 and 35. The instruction sequencer 22 provides control over the data flow amount execution units 25-33, and the register files 34-35. Accordingly, the instruction sequencer 22 implements a 4-stage (fetch-decode-execute-writeback) master instruction pipeline, enforces data interlocks, dispatches (issues) instructions to available execution units 25-33, directs data from the register files 34-35 onto and off of the busses 36 and 38, and maintains a state history so it can back the system 20 up in the event of an exception.

In the preferred embodiment, the integer execution units 26-28 comprises two identical arithmetic logic units (ALU's) 26, and 27, and one bit-field unit (BFU) 28. Each subunit has a one clock execution phase and can process instructions at a throughput rate of one instruction per clock. The graphics units comprise a packer unit 29 and an adder unit 30, and each unit executes graphics instructions in a single clock. The floating point adder (ADD) 31 and multiplier (MULTIPLY) 32 units execute floating point instructions in three clocks (independent of the operand precision) but are fully pipelined to allow new instructions to issue every clock. The floating point divide unit (DIV) 33 is a non-pipelined iterative design. The DIV unit 33 is shared between floating point and integer divide operations. The results produced by the floating point units 31-33 are exact IEEE results with no software fix-up required. The floating point units 31-33 run concurrently with all other execution units 26-29 and any mix of integer, memory, graphics, and floating point operations can be issued together in the same clock.

In accordance with the preferred embodiment, a large 32-word general purpose register file (GRF) 34 provides operands for integer, logical, bit-field, memory addressing, graphics, and floating point operations. In addition, an extended 32-entry register file (XRF) 35 provides additional storage for floating point operands. The XRF 35 can hold 32 values of any precision (single, double, or extended). There are two writeback busses 36 available to the execution units 25-33. For the purpose of simplification, the term "write-back" will be used when a particular execution unit transfers information onto one of the two buses comprising the writeback busses 36. Execution units 25-33 are each independent functional units with their own internally controlled pipelines. When an execution unit finishes execution of an instruction it places the result data onto a writeback bus 36. The register files 34-35 take the data off the writeback busses 36 and store it into the correct destination register. If another instruction is waiting for this data, it is "forwarded" past the register files 34-35 directly into the appropriate function unit(s). This allows a data dependent instruction to issue on the next clock without waiting for the data to be written into the register file and read out back again. Since different execution units have different pipeline lengths, it is possible for more than two instructions to be completing in a given clock cycle. Consequently, execution units 25-33 arbitrate for an available slot on a writeback bus 36. The highest writeback priority is granted to single cycle execution units, such as the integer units 26-27, and the graphics units 29-30, so that single cycle instructions are always guaranteed a writeback slot while multistage pipeline units, such as floating point units 31-33 and load/store units 25, arbitrate for writeback slots. Pipelined execution units which are denied a writeback slot, will continue to advance their internal pipeline stages and accept new instructions until all pipeline stages are full.

Internally, data processing system 20 uses a Harvard architecture with separate paths for the instruction stream and the data stream. Separate caches 40, and 42 are used to supply the two streams. On cache hits, the instruction cache 40 can deliver two instructions and the data cache 42 can accept or deliver a 64-bit operand each clock. Cache misses are serviced by filling the cache line with a burst bus transaction beginning with the address of the missed datum (or instruction). During the line fill, instructions or data are streamed directly from the bus to their respective units. Data cache coherency among multiple processors is maintained by bus snooping. Separate tags are maintained so that snoop activity does not interfere with normal processor accesses.

In accordance with the preferred embodiment, the sequencer 22 is responsible for instruction flow in system 20. Sequencer 22 retrieves instructions from an instruction cache 40 and branch accelerator cache 24, and dispatches the instructions to one of the execution units 25-33 based on availability and inter-instruction data dependencies. A maximum of two instructions are decoded and considered for issue to the execution units 25-33 on each clock. The pipeline stages are fully hardware interlocked so that data dependencies will automatically stall instruction issue without software assistance. When an instruction "issues", the source data for that instruction is transferred from a source register in the general register file 34 onto the source operand busses 38, and the associated destination register is marked "busy". A hardware scoreboard maintains a record of all busy registers. The execution unit 25-32, to which the instruction issues then reads data off the appropriate source bus 38. The register files 34-35 and source busses 38 have sufficient bandwidth to sustain execution throughput at the peak rate of two instructions per clock. When the instruction is complete, the destination register is written with the result data, and the busy bit for the register is cleared.

The data types used in graphics system are unique. Often, data is packed tightly to conserve storage and improve memory bandwidth utilization. Thus, using conventional instructions to operate on graphics data may causes a performance bottleneck. The graphics units 29-30 implement a set of instructions which are designed to operate on graphics data in a manner which accelerates the rendering of 3-D color graphics images. Each of the graphics units execute instructions in a single clock; however, they are not identical and each can accept only one instruction, of the type it executes, per clock. In the preferred embodiment, these graphics units 29-30 perform efficient manipulation of pixels by operating on multiple bit-fields, within 64-bit operands, in parallel. All graphics operands are located in the general register file 34, therefore, no special registers or temporary registers are needed. Thus, the graphics instructions provide the same generalized flexibility as the other instructions (i.e. floating point, integer) executed by data processing system 20. The graphics adder unit 30 is a dual 32-bit adder with controllable carry chains on each 8-bit boundary. Arithmetic is carried out using either modulo or saturation arithmetic. Overflow and underflow detection and maximum and minimum field values are dependent on whether the operands are signed or unsigned numbers. The graphics pixel packing unit 29 is a specialized bit-field unit for packing, unpacking, and shifting pixel or fixed-point data. It operates on multiple bit-fields within 64-bit operands in parallel.

The data processing system 20 reads graphics data in 64-bit quanta, and then allows individual fields within the 64-bit words to be processed in parallel - avoiding the need to pull them apart and operate on them individually. In the preferred embodiment of the present invention, the graphics units 29-30 execute graphics instructions using "pixel-at-a-time" processing. In pixel-at-a-time processing, all color channels for a given pixel are completely processed before proceeding to the next pixel. Thus, for example, the graphics units 29 would initially process the red and green color channel of a pixel in a selected graphics instruction, then process the blue and alpha channel of the same pixel before moving on to the next pixel on the scan line.

In the present invention, a pixel pack instruction works generically on multiple fields in a wide (64-bit) operand. It is general in nature, and useful in a variety of graphics rendering algorithms including shading, Z-buffering, compositing, and image processing. Graphics shading and image processing algorithms often compute color intensity using high precision 32-bit fixed point values to minimize error accumulation on intermediate. Once the color intensity calculations are performed, the results must be truncated to lower precision integers and packed into the channels (aRGB) which comprise a pixel. The pixel pack instruction performs the truncation and packing on multiple channels in parallel, and accumulates the results in natural pixel-at-a-time processing order.

In the present invention, the pixel pack instruction accumulates the pixel data as it is computed by truncating multiple fixed-point values, packing the resulting bit-fields tightly together, inserting them into a second source operand, and rotating the result into proper position for the next iteration - all in a single clock. Rotation to the left by any multiple of 4 bits from 0 to 60 bits is performed as part of the packing operation. The pixel pack instruction operates on a 32-bit fixed-point number (color intensity field) comprising an 8-bit integer value, and a 24-bit fraction, thereby building a 32-bit pixel. Thus, the resulting 32-bit aRGB pixel comprises 8-bits for the alpha channel, and 8-bits for each of the respective color channels (red, green and blue).

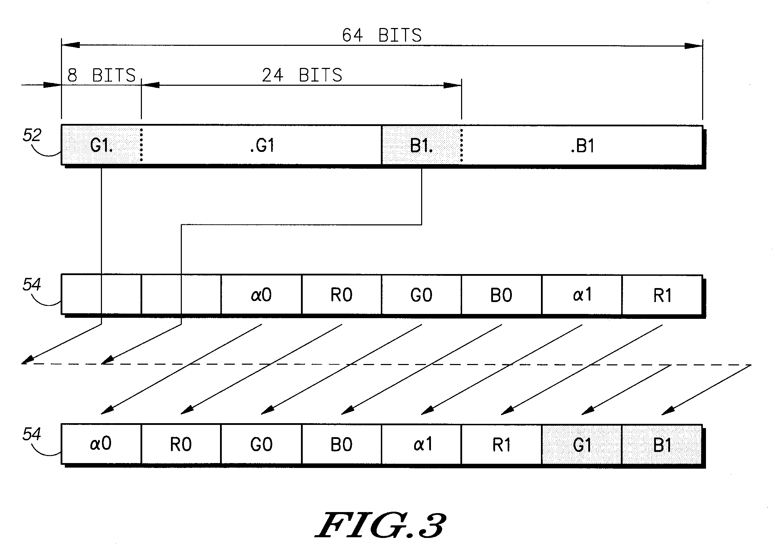

Shown in FIG. 3 is a diagram illustrating the operation of the pixel pack instruction, in accordance with the present invention. As shown in FIG. 3, the two graphics operands (S1 and S2) are retrieved from source registers 52 and 54, respectively, in register file 34. As previously indicated, the registers in register file 34 are 64-bits wide. In the example provided, the result of the pixel "0" computation, previously performed by the graphics pack unit 29, is being accumulated with the pixel data for an adjacent pixel "1". In operation, the pixel pack instruction truncates the two 32-bit fixed point intensity values of the first source operand (S1) to two 8-bit integers (G1, B1). The two-8-bit integers, representing the green and blue color channel intensities, are packed together and inserted into the second source operand (S2) retrieved from register 54, thereby forming an intermediate color calculation for the pixel "1". This intermediate value is rotated (shifted) by a predefined number of bits based upon the field size of the channels. The pixel pack operation is performed repeatedly until a sufficient number of pixels have been computed to perform the shading algorithm.

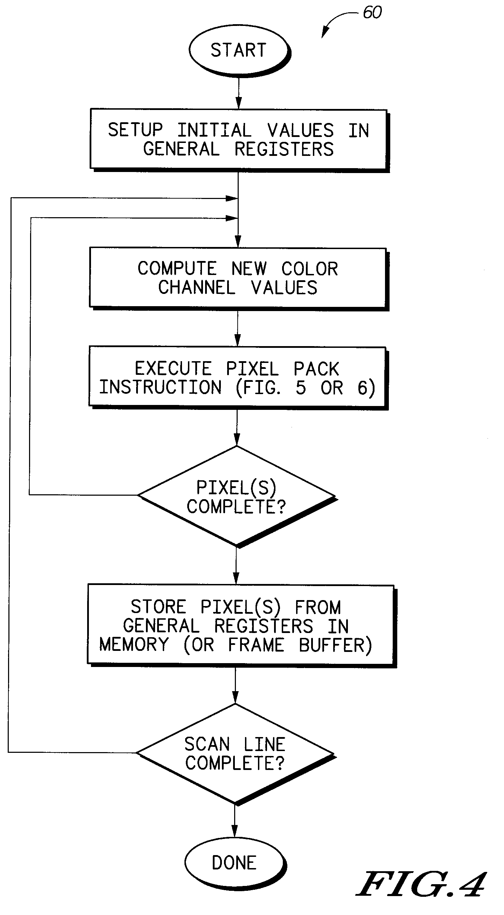

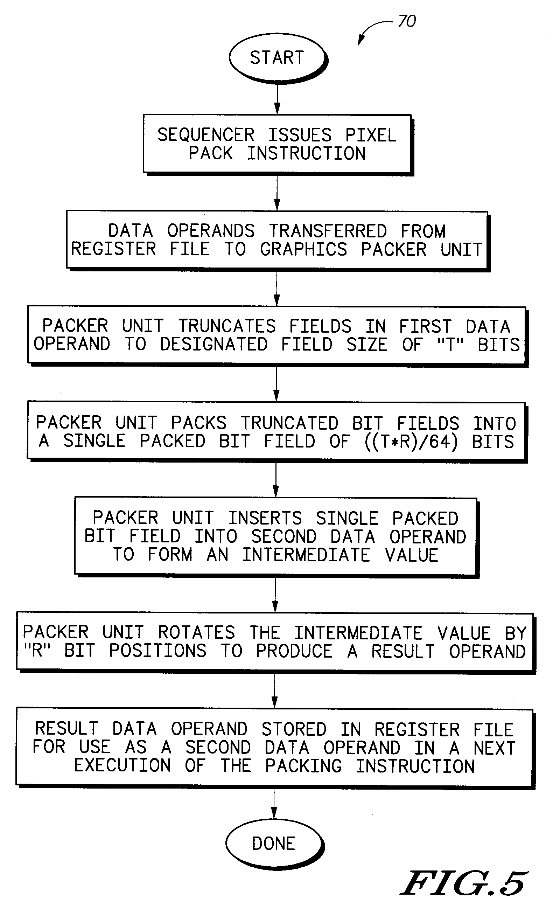

In accordance with the present invention, the pixel pack instruction operates on multiple bit-fields within 64-bit operands. When the sequencer 22 issues the pixel pack instruction ("ppack"), the field size (T) and the rotation size (R) are encoded in the instruction. Shown in FIG. 4 is a flow diagram 60 illustrating how the pixel pack instruction of the present invention is used to perform a shading algorithm. At the start of the shading algorithm, software initializes the set-up of graphics operands in the general register file 34. In conjunction with the user software, system 20 will compute new pixel color channel values based upon fixed point values (i.e. color intensity) provided during the set-up of the graphics operands. The sequencer 22 issues the graphics packing instruction, which may utilize pixel-at-a-time processing, as illustrated in flow diagram 70 (FIG. 5). When executing the pixel-at-a-time pixel pack instruction, the sequencer 22 transfers the required data operands from the general register file 34 to the graphics packer unit 29, via the source bus 38. In response to the issuance of the pixel pack instruction, the packer unit 29 truncates the first data operand (S1) to the designated fields of size "T" bits. In the present invention, truncation entails shortening the bit length of each field to a predefined number of bits, thereby forming a truncated bit field. The packer unit 29 then packs the truncated bit fields into a single packed bit field of ((T*R)/64) bits, and inserts the single packed bit field into a second data operand (S2), thereby forming an intermediate value. For example, in the present invention, a field size of 16-bits will be truncated to 4-bits when the rotation size is also 16-bits. Likewise, a field size of 32-bits will be truncated to 8-bits when the rotation size is 16-bits, and so on. The packer unit 29 rotates the intermediate value by "R" bit positions to provide a result data operand (D), thereby accumulating the new pixel channel values (G1, B1, as shown in FIG. 3) into the previously partially computed pixel (a1, R1, as shown in FIG. 3).

The accumulated result (D) is stored in the general register file 34, freeing the graphics packer unit 29 to execute other graphics instructions. Upon completion of the computation of the color intensity for two adjacent pixels, the final result is stored in memory 50 (FIG. 3), or a video frame buffer (not shown). When the computation of the intensity for each color channel (aRGB) for all pixels in the scan line is complete, the software routine repeats the operation shown in flow diagram 60 (FIG. 4) for each scan-line crossing the polygon being shaded. The pixel pack instruction may be used in conjunction with many types of graphics rendering algorithms, (i.e. Z-buffered shading, and image compositing algorithms).

In an alternate embodiment of the present invention, the graphics packer unit 29 executes the pixel pack instruction using "channel-at-a-time " processing. In channel-at-a-time processing, one channel from each of two (or more) adjacent pixels is processed at a time. For example, the red channels of two adjacent pixels would be processed, then the two green channels, etc.

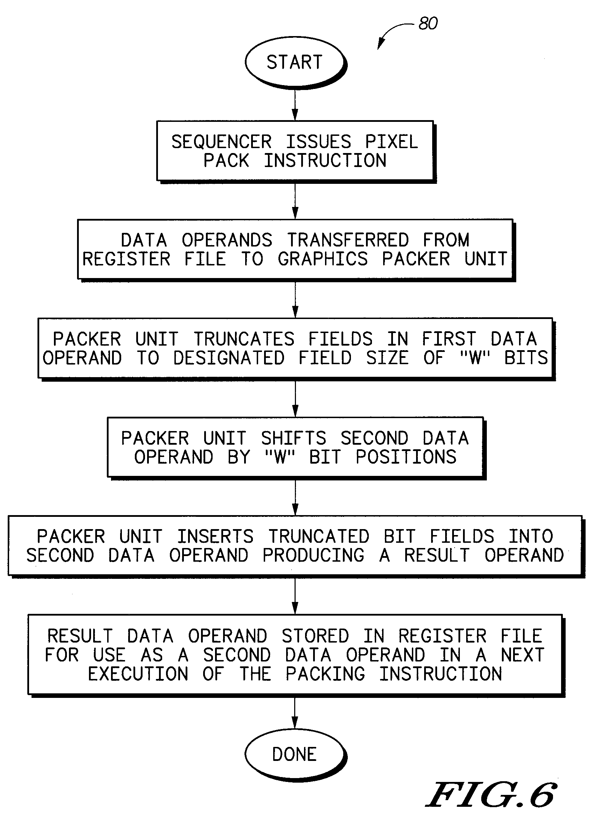

Shown in FIG. 6 is a flow diagram 80 for performing a pixel pack instruction using channel-at-a-time processing, in accordance with an alternate embodiment of the present invention. Once again, two graphics operands are retrieved from source registers 52 and 54 (S1 and S2), respectively in register file 34. For example, the green and blue color channels (G0, B0 and G1, B1) for pixel "0" and pixel "1", respectively, were previously computed, and the graphics pack unit 29 is now accumulating the result with the pixel data for the red (R) color channel. In operation, the channel-wise pixel pack instruction truncates the fixed point values (representing the red color channel intensity for pixel "0", and red color channel intensity for pixel "1") in the first data operand to a designated field size of "W" bits, thereby forming two truncated fields. The two truncated fields, representing the red channel intensity for pixels "0" (R0) and pixel "1" (R1), are inserted into the second source operand (S2) retrieved from register 54. The result operand is stored in register file 34 for further accumulation of channel results for adjacent pixels in a scan-line of the polygon being shaded.

While the invention has been described in a preferred embodiment, it will be apparent to those skilled in the art that the disclosed invention may be modified in numerous ways and may assume many embodiments other than that specifically set out and described above. For example, the source operands for the graphics instructions may be stored in the main memory 50, and transferred to the source busses 38 via the sequencer 22. Alternatively, the source operands may be stored in the extended register file 34. Furthermore, in the present invention, the number of fields, the field sizes, and the number of bits truncated may vary according to information encoded in the instruction opcode. Accordingly, it is intended by the appended claims to cover all modifications of the invention which fall within the true spirit and scope of the invention.

**Claims**

1.  In a data processing system (20), comprising:
    storage means (50) for storing a plurality of data elements and a plurality of instructions, said plurality of data elements comprising data operands for use with said plurality of instructions;
    an arithmetic logic execution unit (26,27) for executing a selected type of instructions;
    a graphics execution unit (29) for executing a selected type of graphic instructions received from said sequencer means;
    communications means (36,38,44) coupled to each of said execution units (26,27,29), for providing said instructions of said selected type to each of said execution units, said communications means transferring said plurality of data elements between said storage means (50) and said execution units (26,27,29); and
    sequencer means (22) for providing a sequence of instruction addresses to said storage means (50), for receiving a sequence of instructions for execution by said execution units (26,27,29) in response thereto, and for delivering said sequence of instructions to said communications means (36,38,44), said sequencer means (22) also retrieving a required number of data elements from said storage means (50) for each instruction in said sequence of instructions;
    a method for executing a packing instruction of a selected type using said graphics execution unit, said method comprising the steps of:
    transferring a selected number of data operands to said graphics execution unit (29), one of said selected data operands comprising a plurality of bits representative of one or more fixed point values;
    truncating each of the one or more fixed point values to a predetermined number of bits, said predetermined number of bits comprising a plurality of bit fields;
    packing said plurality of bit fields into a single packed bit-field;
    inserting said single packed bit-field into a predetermined position in a second one of said selected data operands to provide an insert value.

2.  The method of claim 1 wherein said insert value is an intermediate value, and rotating said intermediate value by a predetermined number of bit positions to provide a result data operand for storage in said storage means. (50)

3. The method of claims 1 or 2, further comprising shifting a second one of said selected data operands by a number of bit positions equal in length to a number of bits comprising the single packed bit-field; and

inserting said single packed bit-field into a predetermined position in said second one of said selected data operands to provide a result data operand for storage in said storage means.

4. The method of claims 1, 2 or 3, further comprising shifting a second one of said selected data operands by a number of bit positions equal in length to a number of bits comprising each one of said plurality of truncated bit fields; and inserting said plurality of truncated bit fields into a predetermined position in said second one of said selected data operands to provide a result data operand for storage in said storage means.

5. The method of any preceding claim further comprising the step of using information encoded in an opcode corresponding to said packing instruction to determine a first value corresponding to a bit length of said truncated bit fields and a second value corresponding to a number of bit position for rotation of said intermediate value.

6. The method of any preceding claim further comprising the step of using information encoded in a third data operand to determine a first value corresponding to a bit length of said truncated bit fields and a second value corresponding to a number of bit position for rotation of said intermediate value.

EP 0 485 776 A2

OBJECT MODELS → VIEWPOINT TRANSFORMATION (11) → LIGHTING (12) → SHADING (13) → IMAGE PROCESSING (14) → WINDOWING & DISPLAY OF INFORMATION (15) → RED, GREEN, BLUE

10

*FIG.1*
-PRIOR ART-

*FIG.2*

EP 0 485 776 A2

*FIG.3*

EP 0 485 776 A2

60

```
        ┌──────────┐
        │  START   │
        └────┬─────┘
             │
             ▼
  ┌────────────────────────┐
  │ SETUP INITIAL VALUES IN│
  │   GENERAL REGISTERS    │
  └───────────┬────────────┘
              │
   ┌──────────┼────────────┐
   │          ▼            │
   │  ┌─────────────────┐  │
   │  │  COMPUTE NEW     │  │
   │  │  COLOR           │  │
   │  │  CHANNEL VALUES  │  │
   │  └────────┬─────────┘  │
   │           ▼            │
   │  ┌──────────────────┐  │
   │  │ EXECUTE PIXEL    │  │
   │  │ PACK INSTRUCTION │  │
   │  │ (FIG. 5 OR 6)    │  │
   │  └────────┬─────────┘  │
   │           ▼            │
   │       ◇───────◇        │
   │      ╱ PIXEL(S) ╲      │
   └─────◇  COMPLETE? ◇     │
          ╲         ╱       │
           ◇───┬───◇        │
               ▼            │
   ┌──────────────────────┐ │
   │  STORE PIXEL(S) FROM  │ │
   │  GENERAL REGISTERS IN │ │
   │  MEMORY (OR FRAME     │ │
   │  BUFFER)              │ │
   └──────────┬───────────┘ │
              ▼             │
          ◇───────◇         │
         ╱ SCAN LINE ╲      │
        ◇  COMPLETE?  ◇─────┘
         ╲          ╱
          ◇───┬────◇
              ▼
        ┌──────────┐
        │   DONE   │
        └──────────┘
```

*FIG.4*

12

FIG.5

*— 80*

```
        ( START )

  ┌─────────────────────────┐
  │  SEQUENCER ISSUES PIXEL  │
  │     PACK INSTRUCTION     │
  └─────────────────────────┘

  ┌───────────────────────────────────┐
  │  DATA OPERANDS TRANSFERRED FROM    │
  │ REGISTER FILE TO GRAPHICS PACKER UNIT │
  └───────────────────────────────────┘

  ┌──────────────────────────────────────┐
  │ PACKER UNIT TRUNCATES FIELDS IN FIRST DATA │
  │ OPERAND TO DESIGNATED FIELD SIZE OF "W" BITS │
  └──────────────────────────────────────┘

  ┌─────────────────────────────┐
  │  PACKER UNIT SHIFTS SECOND DATA  │
  │   OPERAND BY "W" BIT POSITIONS   │
  └─────────────────────────────┘

  ┌────────────────────────────────────────┐
  │ PACKER UNIT INSERTS TRUNCATED BIT FIELDS INTO │
  │ SECOND DATA OPERAND PRODUCING A RESULT OPERAND │
  └────────────────────────────────────────┘

  ┌────────────────────────────────────────┐
  │ RESULT DATA OPERAND STORED IN REGISTER FILE │
  │  FOR USE AS A SECOND DATA OPERAND IN A NEXT │
  │    EXECUTION OF THE PACKING INSTRUCTION    │
  └────────────────────────────────────────┘

        ( DONE )
```

*FIG.6*